# EUROPEAN PATENT APPLICATION

(11) **EP 4 382 282 A1**
(43) Date of publication of application: **12.06.2024**
(21) Application number: 23207198.5
(22) Date of filing: 31.10.2023
(51) Int. Cl.: B29C 65/08, B29C 65/10, B29C 65/14, B29C 65/18, B29C 65/72, B29K 67/00

(54) **METHOD AND SYSTEM FOR ULTRASONIC WELDING OF NON-WOVEN PET/RPET MATERIALS AND PRODUCTS THEREOF**

(30) Priority: 09.12.2022 LT 2022551
(71) Applicant: UAB BAGFACTORY, 11107 Vilnius (LT)
(72) Inventor: Rumbinas, Marius, 13103 Vilnius raj., Galgiai (LT); Draguniene, Danguole, 01104 Vilnius (LT); Krolis, Gvidas, 10220 Vilnius (LT); Raisutis, Renaldas, 50274 Kaunas (LT)
(74) Representative: Klimaitiene, Otilija

(57) **Abstract**

The invention discloses an ultrasonic welding method and a system for producing products from a non-woven PET and RPET materials as automated process, by welding non-woven PET and RPET materials with ultrasound impact. The invention describes the process of ultrasound welding of non-woven PET/RPET materials, and the control of the specific parameters of this process. The automated production system is also described, wherein the system comprises means of ultrasound welding of non-woven residual termoplastic material layers, as well as additional technical means for automated production stages of non-woven material products. Also, a non-woven PET/RPET material products produced by the ultrasound welding method within the automated production system are described with the testing results thereof.

## Description

### FIELD OF THE INVENTION

The invention belongs to the field of industrial energy and production equipment. More specifically, the invention discloses an ultrasonic welding method and system for automatically producing various products, such as shopping bags, from a non-woven PET/RPET materials. The invention comprises the ultrasound exposure process, the control of its parameters, and the adaptation of the process to produce products from a non-woven PET/RPET materials in an automated manner.

### TECHNICAL LEVEL

In European Commission's communiqué of January 16, 2018 *A European Strategy for Plastics in a Circular Economy, (16-01-2018 COM (2018) 28 final* was presented to the European Parliament, the Council, the European Economic and Social Committee and the Committee of the Regions. The document emphasizes that plastic products are produced, used and disposed of without following the principles of the circular economy, and due to increasing pollution pose a threat to nature. It is expected that the new regulations will help to reduce CO₂ emissions and environmental pollution by 3.4 million tons, which will be eliminated by 2030, and that it would cost about 22 billion euros and help consumers save the estimated costs of 6.5 billion euros. The use of plastic bags is also limited by the provisions of the EU Directive 94/62/EC (the EP and Council Directive 2015/720 of April 29, 2015 amending Directive 94/62/EC on reducing the use of light plastic shopping bags, *https:*//*eur-lex.europa.eu*/*legal-content*/*lt*/*TXT*/*?uri=CELEX%3A31994L0062*).

According to this directive, EU countries are encouraged to strive that the amount of used light plastic bags with a wall thickness of 15-50 microns would not exceed 90 per person in 2019, and ten years later - 40 per person. The aforementioned EC documents also set the guidelines for the production and use of plastic bags: member states are obliged to remove lightweight (wall thickness 8-15 microns) bags from consumption from 2019 and look for technological solutions enabling the production of shopping bags from recycled plastic.

One alternative to single-use plastic shopping bags with a wall thickness of 15-50 microns is reusable polypropylene (PP) and polyethylene terephthalate (PET) non-woven bags. Such bags are attractive to consumers, the need for them is regularly growing, and they can be easily printed by using conventional printing methods, so they can also be used for advertising purposes. Most such bags are made of seven parts (material blanks): one solid piece of material that forms the sides and bottom, two sides of a larger diameter, two handles and two strips that are placed on the sewn edges. Blanks of bag material are usually sewn with threads.

An alternative method of joining is thermal welding, using the effect of ultrasound, which heats the fabric and fuses its layers together. The method of exposure to ultrasound allows to increase the speed of production of products, reduce the need for additional materials and significantly reduces their cost. The ultrasound welding method is implemented for the automatic production line of non-woven PP material products. However, there are no technological and automated solutions to produce these products from PET and/or recycled RPET material.

PET/RPET non-woven bags are not new products. Nevertheless, their price (cost) is still high compared to the plastic and PP non-woven shopping bags that are on the market today. As mentioned, there are no technological solutions for an automatic production line. The production of PET/RET products on the market is extremely inefficient, and these products are sewn by hand in low-wage countries. The automated sewing process is complex, so achieving the required speed is problematic. Even in a robotic-automated sewing process, it takes a considerable amount of time for the sewing head assembly to consistently sew each seam. Also, during sewing, needles and threads can break, while replacing them requires downtime in the production process, which also wastes the time of the service staff.

Thermal ultrasonic bonding of non-woven PET/RPET material is currently still in the experimental stage, and a reliable manufacturing process to form such a non-woven PET/RPET material bonding is not yet known. The task is further complicated because RPET material may be obtained in various ways and from various sources, so composition of it may be not uniform and precisely known in advance.

Several patent documents disclose methods and means of joining plastic materials by using high-power ultrasound effects. The Chinese patent documents CN216462423(U) (2022), CN112828440 (2021), and CN216683392(U) (2022) describe the possibility of adjusting the vertical height of the ultrasonic welding assembly to the surface of the object to be welded, the mechanism for controlling the height change, the vertical stand segment connecting the ultrasonic welding assembly and its height change control mechanism with the horizontal stand segment, as well as a horizontal base for placing the plastic workpieces to be welded. After compressing the compacted sheets of material and exposing them to ultrasound, intermolecular friction of the material and friction of the surfaces of the compressed sheets occurs, and the temperature rises until the complete fusion of the layers of the material. However, the technological solutions disclosed in the above mentioned patent documents are suitable only for welding of individual products and non-automatic production, by manually assisting and removing ultrasonically welded products on a horizontal base.

The reviewed solutions for welding plastic materials under the influence of ultrasound have the following disadvantages:
- Not suitable for automatic production of non-woven material products, as well as in its different stages thereof;
- Not applicable / not suitable for automatically welding of more than two layers of non-woven material in the production line;
- Do not carry out automated ultrasound welding of RPET non-woven materials in the production line.

### SUMMARY OF THE INVENTION

**The problem.** Technical level documents reveal the principles of applying ultrasound exposure to joining plastic (polymeric) materials (ultrasound welding). After compressing the sheets of material blanks and exposing them to ultrasound, the intermolecular friction of the materials and the friction of the surfaces of the sheets takes place, and the temperature rises until their complete fusion. The practical application of this effect is limited in automatic manufacturing processes where it is important to achieve high speed.

The technical problem of this invention is the efficient joining of non-woven PET/RPET material blanks in the process of automatic production of the product. Two or more layers of bonded non-woven PET/RPET material are required. Specifically, four layers need to be welded in the production of the bag.

**Solution.** A technical solution is disclosed to carry out the production process of non-woven PET/RPET material products, where the joining seams of PET/RPET non-woven material blanks would be welded automatically and sufficiently quickly under the influence of ultrasound, in the production of a series of copies of a specific product, such as a non-woven bag. The production of this product (bag) includes seven separate PET/RPET material blanks and the following operations (steps) for joining them:
- Folding of the edge of the non-woven material blank;
- Forming the edges of the blank;
- Forming bag handles;
- Welding of bag handles;
- Forming bag bottom.

Each of these steps is different and specific, requiring specialized ultrasound welding process parameters.

The invention discloses the configuration of the production device (prototype) to join the blanks of non-woven PET/RPET material under the influence of ultrasound, where these blanks and their joining operations have different properties:
- For folding and welding the edges of a bag made from blanks, using a spatially focused ultrasound effect, when the blank moves continuously on the conveyor of the production line. In this case, the basis is a rotating wheel, on the surface of which there are raised contact-segments providing the ultrasound effect to form the seam stitches. At the same time, the wheel is in contact with the blank of the welding material and the tip of the vibrating-with-ultrasound-frequency ultrasound concentrator/specialized form with two contact segments of the ultrasound impact, where the dimensions of one segment can be 2x1 mm, and the average distance between the segments can be more than 1 mm. The ultrasound concentrator/specialized form mold is excited by the ultrasound oscillation generator of the appropriate frequency and power. A programmable system controller is used to control the ultrasound welding process.
- Welding of the bag handles by using spatially focused 20 kHz ultrasound exposure. The material blank of the product (bag) slides along the conveyor line with the help of electro-pneumatic dynamic clamping control. The ultrasound concentrator/specialized form that is adapted for the formation of the handle fastening seam is lowered at the right moment and pressed onto the compressed material blanks, the seam welding is performed, after which the mold is raised again until the following bag blank is moved. The working surface of the ultrasound concentrator/specialized form has embossed contact-impact segments that form fusion seam stitches during compression. For example, these segments are arranged on the working surface of the ultrasound concentrator/specialized form "on the sides and diagonals of a square". The ultrasound concentrator/specialized for is excited by the ultrasound oscillation generator of the appropriate frequency and power. A programmable system controller is used to control the ultrasound welding process.

- Ultrasound welding of the bottom seam and edge seam of the product (bag) made from non-woven PET/RPET material blanks, achieving the high speed necessary for production conditions:
   ∘ It is necessary to use a horizontal base with an integrated function of initial heating of the material blank (up to +300 °C);
   ∘ A spatially distributed 15 kHz ultrasound effect is used to weld the workpieces;
   ∘ The product (the bag) material blank is moved on the line, and using electro-pneumatic dynamic clamping control, the ultrasound concentrator/specialized form is lowered and pressed at the appropriate moment to form a seam on the joined compressed blanks, then ultrasound welding is performed, and then the ultrasound concentrator/specialized form is raised, until the blank of the next specimen of the product is moved;
   ∘ In the active welding process, the ultrasound concentrator/specialized form of ultrasound exposure can touch the product material at the same time with 150-300 contact ultrasound exposure segments, where the dimensions of one segment can be 4x0.5 mm, and the average distance between the segments can be more than 1 mm;
   ∘ The ultrasound concentrator/specialized form is excited by the ultrasound oscillation generator of the appropriate frequency and power.
   ∘ A programmable system controller is used to control the ultrasound welding process.

The system control equipment ensures the automatic adaptation of the work parameters and the maintenance of the optimal working mode of the ultrasound exposure equipment as the working conditions change.

The system consists of the electronic/automation components, the industrial ultrasound oscillation generators of various frequencies and powers, the heater bases with heating elements for preheating non-woven PET/RPET material blanks, the sets of piezo-elements and the ultrasound concentrators/specialized forms for the corresponding seams, the controllers for controlling ultrasound generators and processes in the product production line.

**Effects.** A device (prototype) of a suitable functional configuration, intended for joining non-woven PET/RPET material blanks under the influence of ultrasound, is characterized by:
- The joining seams are of good quality and the appearance of the seam is attractive to the user; according to the results of the load measurement, the two handles of the bag made by this method and device can withstand up to 60 kg of total weight placed in the bag;
- If the production line stops, the material blanks are not damaged due to the continuous exposure to high temperatures, as would happen in the thermal bonding process alone;
- No hazardous fumes are released into the environment, compared to the thermal bonding process alone;
- The duration of the ultrasound welding of a seam is shorter than in the thermal joining process alone;
- Using the system automation controller allows to:
   ∘ Control and repeat the ultrasound welding process,
   ∘ Turn on the ultrasound impact generator and, with it, excite the ultrasound concentrator/specialized form (specifically for forming a seam) only at a certain time of forming the seam with a certain duration set in the system controller,
   ∘ Monitor welding parameters and adjust them if necessary;
- PET/RPET ultrasound welding technology allows welding of more than 2 sheets of non-woven PET/RPET material in an automatic manner. For example, in the production of a specific product (a bag), 4 sheets of material are welded (double-thickness folded edge and double-thickness handle);
- The usual process of thermal welding of plastics (thermoplastics) is based on continuous high-temperature exposure and heaters: the temperature is maintained by high-power regular heating elements that continuously consume electricity. Energy consumption due to thermal effects alone when welding 100 seams per minute is 2000 W/hour. When working in two shifts (16 hours per day), the energy consumption is 32000 W/day. Meanwhile, when welding plastic materials under the effect of ultrasound, energy is used only during the time interval of ultrasound welding, during the intermolecular friction of the material and the surfaces of the layers, until the complete fusion of the layers of the material. When applying the ultrasound effect, the welding of one seam takes about 0.2 seconds. If 100 stitches are connected per minute, then the ultrasound effect is 20 seconds in a 1-minute process. Accordingly, using a 2000 W ultrasound exposure generator saves about 30% of electricity compared to a continuous thermal exposure process of the same power;
- The technology of the invention saves energy and protects the environment, as high-quality products are produced with less defects and production waste due to higher-quality ultrasound connection, and less electricity is consumed in their production.
- During ultrasound welding, due to high-frequency ultrasound exposure, technological impurities (grease, waste particles, dust) are removed from the material surfaces, which would have a negative impact on the quality of the joint in the case of thermal welding alone;
- The technical solution of the invention allows the non-woven RPET material product to be made from 100% recycled PET bottles. RPET products have all the characteristics typical of textile bags: reusable, fully recyclable, suitable for contact with food, water-based dyes are used in production, they can be washed in a washing machine at low temperatures. The product complies with the 360-degree renewal cycle and circular economy principles.

### DESCRIPTION OF DRAWINGS

The essential aspects of the invention are explained in the drawings and diagrams, which are an integral part of the description of the invention and are provided by way of reference to a possible implementation or visual explanation of the invention. The drawings are schematic and principled, the sizes, proportions and specific implementation options of the objects depicted in them may differ within the scope of the invention.

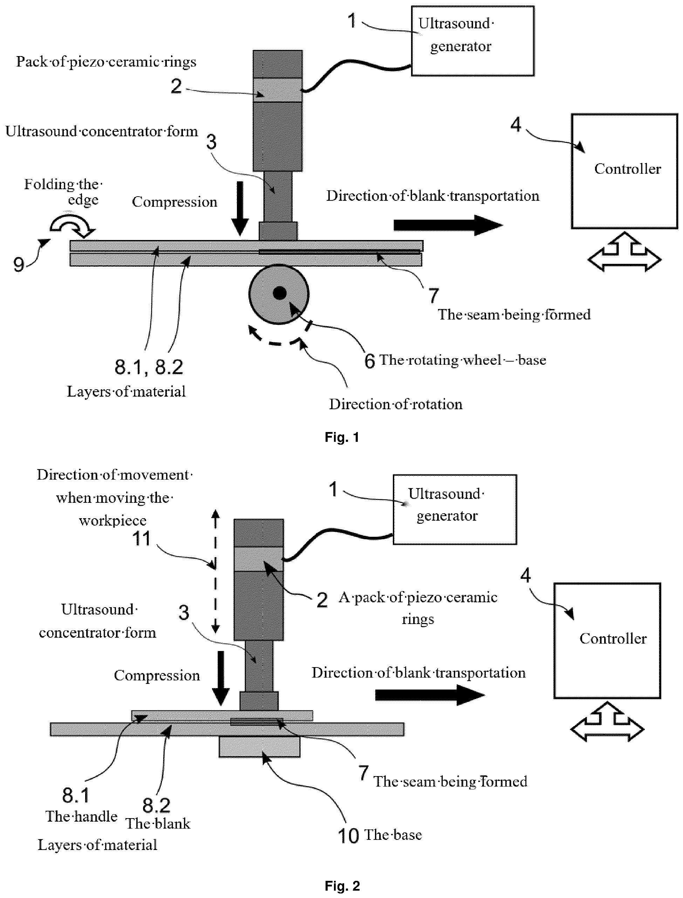

- **Fig. 1**: Folding and welding of the edges (9) of the product (bag) of non-woven PET/RPET material under the influence of spatially focused ultrasound (20 kHz) when the product blank (8.1, 8.2) moves continuously on the conveyor of the production line: in this case, the base is a rotating wheel (6), the surface of which is covered with the embossed contact-impact segments for forming stitches of the seam (7). At the same time, the wheel (6) is in contact with the non-woven blank to be welded and the end of the ultrasound concentrator/specialized form (3) with 2 contact impact segments (the dimensions of one segment could be 2 x 1 mm) with an average distance of more than 1 mm between them. Ultrasound concentrator-specialized mold is excited by the ultrasound oscillation generator (1). A programmable system controller (4) is used to control the welding process.
- **Fig. 2**: Ultrasound welding of non-woven PET/RPET material product (bag) handles (8.1) under the influence of spatially focused ultrasound (20 kHz), when the material blank (8.2) moves continuously on the conveyor of the production line using electro-pneumatic dynamic clamping, ultrasound concentrator/specialized form of appropriate configuration to form a seam (3) is lowered and pressed onto the interconnected material blanks (8.1, 8.2) at the right moment, welding of the seam (7) is carried out under the influence of ultrasound; after that, the ultrasound concentrator/specialized form is raised (11) until the blank and the handle (8.1, 8.2) of the next bag instance of the product is moved. The working surface of the ultrasound concentrator/specialized form (3) is covered with the embossed contact-impact segments for forming stiches of the seam (7). In this particular case (welding of the handle 8.1), the impact segments of the ultrasound concentrator/specialized form can be arranged on the working surface (3) as a "square with sides and diagonals". Ultrasound concentrator/specialized form is excited by ultrasound vibration generator (1). A programmable system controller (4) is used to control the welding process.

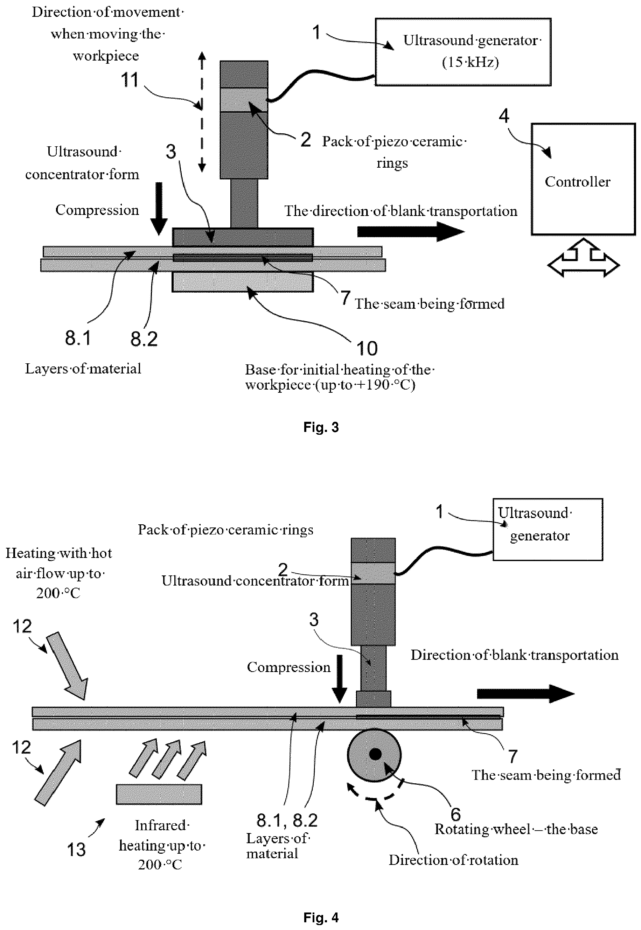

- **Fig. 3**: Welding of the bottom seam (7) of a non-woven PET/RPET material product (bag) under the effect of spatially distributed ultrasound (15 kHz), when the material blank (8.1, 8.2) moves continuously by the conveyor of the production line; in this case, the ultrasound welding of the bottom seam (7) and the edge seam of the non-woven material product (bag) is performed, where the base (10) with the function of initial heating of the material blank (up to +300 °C) is used to achieve the required production speed. As the non-woven material product (bag) blank (8.1, 8.2) moves along the line, after using electro-pneumatic dynamic compression, the ultrasound concentrator/specialized form for forming a seam of the corresponding configuration (3) is pressed at the appropriate moment on the compressed layers of the material blank (8.1, 8.2). Then ultrasound welding is performed, and after that, the ultrasound concentrator seam-form (3) is raised (11) until the workpiece of the next specimen of the product is moved (8.1, 8.2). In the active phase of the ultrasound welding process, the ultrasound concentrator/specialized form (3) for forming a seam of the appropriate configuration with a heated material blank (8.1, 8.2) can touch 150-300 contact segments of the ultrasound impact, the dimensions of anyone of which could be 4 x 0.5 mm, and average distance between the segments more than 1 mm. A programmable system controller (4) is used to control the welding process.
- **Fig. 4**: Ultrasound welding of individual blanks (8.1, 8.2) of a non-woven PET/RPET material product under the influence of spatially concentrated ultrasound, when the material blank moves continuously by the conveyor of the production line, where the blank (8.1, 8.2) is additionally heated in a non-contact way-with a hot air flow (12) or/and infrared rays (13) before ultrasound welding.

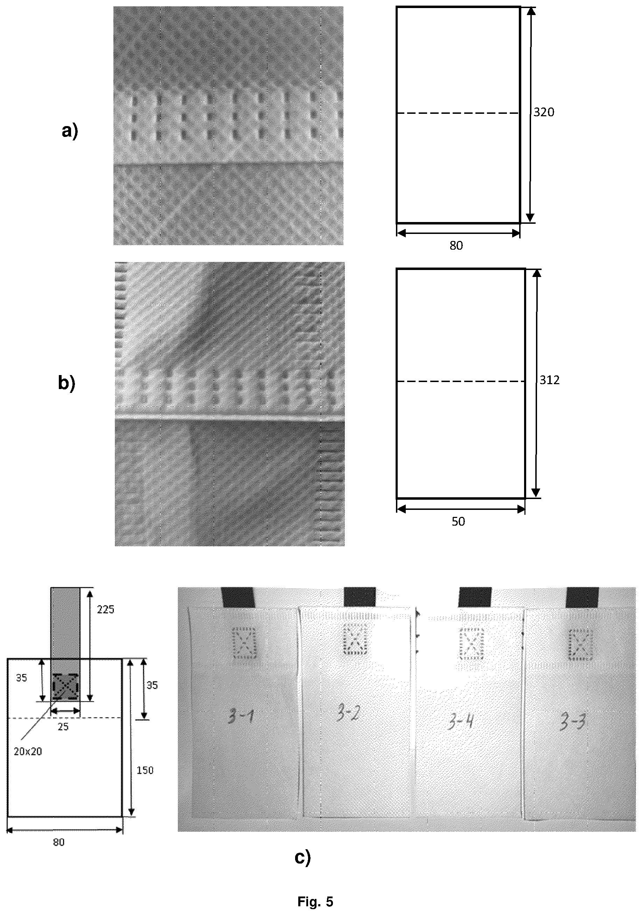

- **Fig. 5**: Examples of joining sheets of non-woven RPET material for tensile tests: **a)** two layers, **b)** four layers **c)** Examples of joining sheets of non-woven material, where a two-layer PET product-bag handle is welded to the edge of a two-layer folded RPET sheet. Dimensions in millimeters (mm).

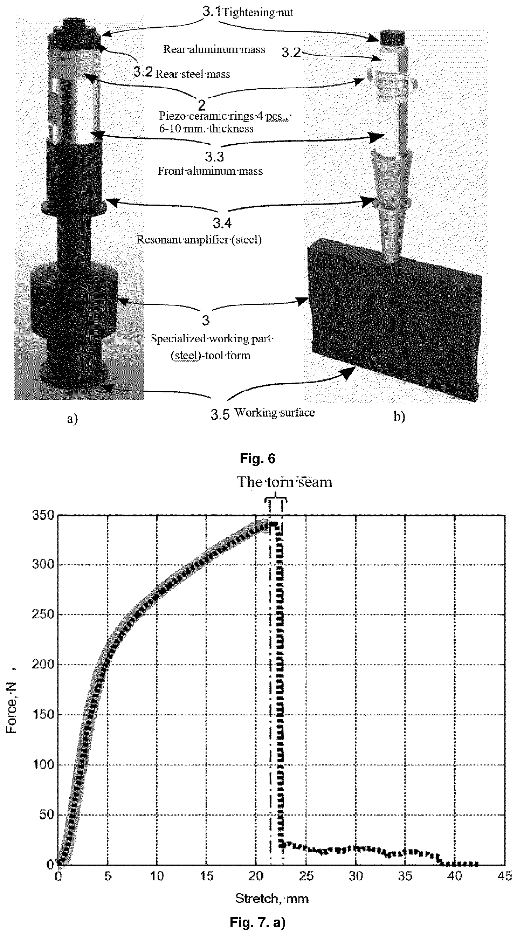

- **Fig. 6**: **a)** 20 kHz ultrasound concentrator-specialized mold design: rear steel mass (3.2), 4 piezo-ceramic rings (2), front aluminum mass (3.3), resonant amplifier (3.4), specialized mold of the working part (3.5); **b)** 15 kHz ultrasound concentrator/specialized form design with tool for long edge/side welding: rear aluminum mass (3.2), 4 piezo-ceramic ring (2), front aluminum mass (3.3), resonant amplifier (steel) (3.4), specialized mold of the working part (steel) (3.5).

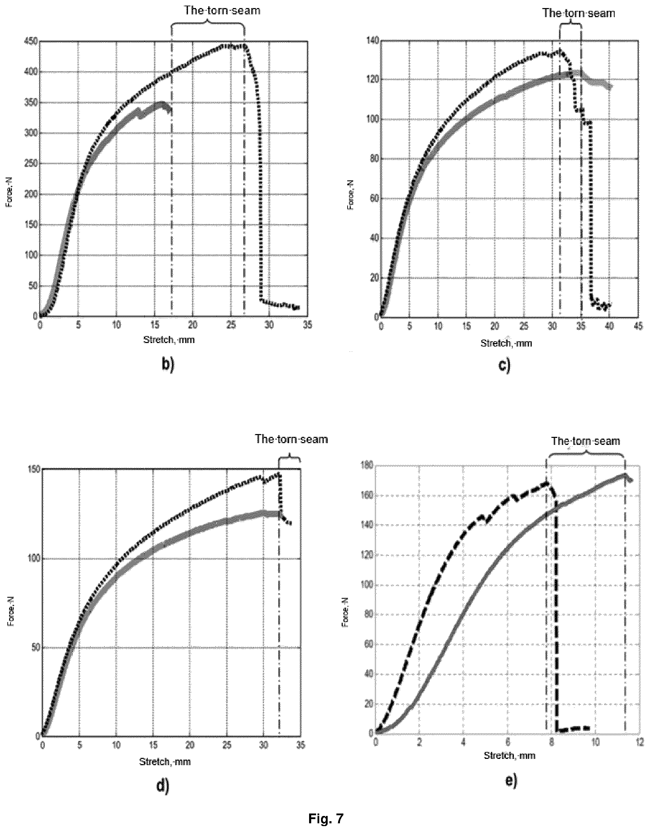

- **Fig. 7**: Test results of the ultrasound welded PET/RPET seams - dependence of tensile strength and elongation of samples when formed: **a)** seam of overlapping single RPET sheets; **b)** seam of two overlapping double sheets; **c)** the seam connecting the PET handle and the RPET edge of the bag (total of 4 sheets are connected to each other); **d)** the seam connecting the PET handle of the product-bag and the RPET edge (4 sheets are joined together in total); **e)** Seam of PET samples, made of overlapping sheets of PET material.

### DETAILED DESCRIPTION OF THE INVENTION

**RPET material and properties.** RPET (recycled polyethylene terephthalate) non-woven material is a fabric made from recycled polyethylene terephthalate (PET, (C₁₀H₈O₄)ₙ) fiber, which can be produced by spunbond or stitchbond. Recycled PET (C₁₀H₈O₄)ₙ fiber is produced from recycled PET granules obtained by recycling used primary PET products of any purpose (plastic bottles, food containers, etc.). The production of RPET fiber uses 94% less water than the production of traditional PET fiber, the production process consumes up to 60% less energy and reduces the amount of CO₂ emitted into the environment by 32%.

**Ultrasound welding process parameters.** In order to efficiently connect PET/RPET non-woven material blanks or layers in production, a process of welding (melting) under the influence of ultrasound is used, in which it is important to determine and/or adapt the following parameters:
1) The temperature of the base of the material blanks, which is raised to a temperature in the range from 200 °C to 300 °C;
2) Ultrasound exposure frequency in the range from 10 to 30 kHz, more suitable range from 13 kHz to 22 kHz, where the following two different ultrasound exposure modes are possible:
   ▪ Spatially focused ultrasound effect with an optimum frequency of 20 kHz with an effective tolerance interval of ±2 kHz (i.e. 18 to 22 kHz). It can be used to weld individual seams or small groups of seams in a concentrated ultrasound welding area or space;
   ▪ Spatially distributed ultrasound effect with an optimum frequency of 15 kHz with an effective tolerance interval of ±2 kHz (i.e. 13 to 17 kHz). It is applicable to weld long seams covering several dozen to several hundred stitches, where the ultrasound impact tool welds the entire seam at once;
3) Ultrasound exposure power, where the range of regulated electric power of the ultrasound exposure generator is from 1500 W to 4200 W;
4) Ultrasound effects the clamping force of the concentrator-specialized mold for forming the seam of the corresponding configuration. Between the initially heated base (substrate) and the concentrator-specialized mold, separate layers of interconnected material blanks are pressed, where the values of the pressing force for the RPET material are in the range of 3-5 atmospheres, i.e. 0.3-0.5 MPa (0.3-0 .5 N / mm²);
5) Ultrasound exposure duration, the range of values of which is from 0.1 to 1 second for welding one joint seam;
6) Also, it is important to precisely match the ultrasound concentrator-specialized mold and the base plane so that the working surfaces of the mold are parallel to the non-woven PET/RPET material blanks and the base to be joined.

The effective values (effective intervals) of these technological conditions and parameters are presented in Table 1.

**Table 1: Technological conditions and parameters for forming joints of non-woven PET/RPET material blanks by ultrasound exposure.**

| **Properties, conditions, parameters** | **Description** | |
|---|---|---|
| Technological joining process | After research, it was found that there is a possibility to combine PET/RPET materials with the effect of ultrasound. | |
| The composition of the non-woven material in the blank | For the fusion of PET/RPET non-woven material blanks, it is important that the blank contains at least 50-65 % of thermoplastic. This was determined after performing experimental analysis and analysis of technical level documents **[1]-[6]**. | |
| Process implementation method | The automatic process of joining material blanks under the influence of ultrasound is based on the thermal effect. Ultrasound oscillations generated during ultrasound exposure cause intermolecular friction of the material blank. Therefore, the thermoplastic material heats up quickly (theoretical viscoelastic heating rate up to 1000 °C/s), and melting of the material layers occurs in the area affected by ultrasound. | |
| Phases of the thermal bonding process | The material blank joining process defines four main phases, suitable for both polypropylene (PP) and non-woven PET/RPET materials: | |
| | • Melting start, | |
| | • The initial contact of the fused layers of material, | |
| | • Mutual mixing of fused material layers in a liquid state (seam formation), | |
| | • Cooling of the formed seam under added pressure. | |
| Parameters of the thermal bonding process | • Ultrasound concentrator-specialized mold clamping duration: | |
| | | - 0.1 s at spatially concentrated ultrasound effect, |
| | | - up to 0.4 s when the effect of ultrasound is partially distributed in space (for PET/RPET materials); |
| | • Blank base temperature: for heating the non-woven material blank with the base or external temperature effect on the blank (200 to 300 °C is suitable for PET and RPET materials); | |
| | • Ultrasound concentrator-specialized mold clamping force (pressure from 0.3 to 0.5 MPa for PET / RPET materials); | |
| | • The power of the ultrasound generator, which depends on the amplitude of spatial ultrasound oscillations of the seam-form of the ultrasound concentrator for the formation of the joining seam of PET/RPET materials: | |
| | | - When applying spatially focused 20 kHz ultrasound exposure, at least 2000 W acoustic power is required; |
| | | - Applying a spatially partially distributed 15 kHz ultrasound effect, at least 4000 W acoustic power is required. |
| | • Ultrasound generator frequency range: generating ultrasound oscillations when an ultrasound concentrator with a specialized seam form is connected: | |
| | | - When applying spatially distributed ultrasound effect - 15 kHz ±2 kHz; |
| | | - When applying spatially concentrated ultrasound effect - 20 kHz ±2 kHz. |
| New properties (with respect to known ultrasound welding solutions, such as PP) | • Ability to change the temperature of the heated base; this is important during the initial heating of the non-woven blank. This feature allows for efficient adaptation of the production process, switching from PP to PET/RPET materials; | |
| | • Stable ultrasound exposure intensity; | |
| | • Ultrasound generator with adjustable power (the limits of the electric power change range are from 2000 W to 4000 W); | |
| | • Optimal clamping force (pressure) of the ultrasound concentrator/specialized form to the surfaces to be connected; | |
| | • Automatic adjustment of the frequency of the generator within the limits (±10 percent or ±1.5 kHz) in order to keep the operation of the ultrasound exposure system in resonance. The resonant frequency of the generator depends on whether the ultrasound effect is applied spatially concentrated (at a frequency of 20 kHz) or partially distributed (at a frequency of 15 kHz). | |
| Control of the production process of ultrasound connection | The technological production process of friction-thermal (ultrasonic) joining is controlled by the following components: | |
| | • | Ultrasonic generator, maximum electrical power from 2000 W to 4000 W, frequency 20 kHz (in case of spatially concentrated ultrasound effect) or 15 kHz (in case of partially spatially distributed ultrasound effect); |
| | • | Piezo material ring packages, mechanical oscillation amplification resonator and ultrasound oscillation concentrator - a specialized mold for joint formation (compatible with a generator with an electrical power of |
| | | 2000 W-4000 W, frequency 20 kHz (in spatially concentrated ultrasound effect) or 15 kHz (in partially spatially distributed ultrasound effect). Ultrasound concentrator/specialized joint seam forming forms - limits of spatial axial displacements: |
| | | ∘ From 30 to 100 micrometers for blanks with an amorphous structure; |
| | | ∘ From 60 to 125 micrometers for blanks with a crystal structure. |
| | • A mechanical pressing system, with which separate layers of non-woven material blanks are pressed between the heating pad and the ultrasound concentrator/specialized seam form. Clamping force values for existing PP/new RPET material are 0.3-0.5 MPa (0.3-0.5 N/mm²); | |
| | • The initial heating of the material layers to be connected is performed by a heating base or tray, the possibility of raising the temperature of the base to +300 °C; | |
| | • A control system that ensures: | |
| | | - the automatic process of the production line, |
| | | - Control of individual operations when switching to PET/RPET materials, and |
| | | - Adjustable product (non-woven bag) production speed. |
| The duration of the stages of the ultrasound joining process of non-woven material blanks | • Total duration <= 1 s; | |
| | • The duration of ultrasound exposure to melt the blank material: 0.1s (for spatially concentrated ultrasound exposure), 0.4 s (for spatially distributed ultrasound exposure), when PET/RPET material layers are connected; | |
| | • Duration of clamping of the welded blank, for cooling of the joining seam without the effect of ultrasound: 0.3-0.5 s. | |

### Product: ultrasound welding process of shopping bag made of non-woven

**RPET material.** A specific application of the ultrasound welding process and its automation for joining non-woven PET/RPET materials is: the production of a standard shopping bag.

The following steps reveal how such a bag is produced from non-woven PET/RPET blanks using ultrasound welding method with appropriate parameter values and using an automated production process system that includes a conveyor line and several ultrasound welding devices welding a bag from 7 blanks in separate stages:
- Sides with a bottom blank,
- Other 2 separate sides,
- 2 reinforcing folded edges,
- 2 handles.

**Ultrasound effect types and ultrasound concentrator-specialized mold modifications:** In the ultrasound welding process, ultrasound exposure can be spatially concentrated (20 kHz center frequency, the working tool has relatively small spatial dimensions and more ultrasound exposure is applied to the part of the material to be welded) or partially spatially distributed ultrasound exposure (15 kHz center frequency, the working tool has relatively large spatial dimensions) and ultrasound exposure is applied to the part of the welded material to be joined along the line). A spatially concentrated 20 kHz center frequency ultrasound exposure is applied to weld bag handles and to fold and seal the bag edges as the blank moves continuously on a conveyor in a production line. A spatially distributed 15 kHz center frequency ultrasound exposure is used to weld the bottom and side seams of the bag.

**Forming the folded edge of the top of the bag.** At this stage, the parameters of the ultrasound exposure system and the steps of the welding process are defined:
- Ultrasound oscillation generator (central frequency ~20kHz, power at least 3000 W);
- Ultrasound concentrator/specialized form (working tool): center frequency close to 20 kHz, power at least 3000 W (with 360° rotation circle, so that the working surface of the ultrasound concentrator/specialized form wears more evenly under high pressing force;
- Working tool: hardened steel rotating wheel with teeth for forming seam segments (example teeth dimensions 0.5 mm x 4 mm).

### RPET Welding Process - Steps:

o The ultrasound generator is activated no later than 0.5 seconds before the start of stretching the RPET material;
o The power of the ultrasound generator is set to the maximum power mode (i.e., 3000 W);
o The center frequency of the ultrasound generator is selected in the range from 19 kHz to 20 kHz according to the resonant frequency of the used ultrasound concentrator/specialized form. Accuracy of matching frequency values ± 0.01 kHz;
o Ultrasound exposure area in the seam segment - 0.5 mm x 4 mm on each side of the bag;
o The ultrasound impact tool (wheel with teeth) is aligned so that its plane fits evenly against the RPET material blank;
o Pressing of the ultrasound impact tool (wheel) is ensured by a pneumatic cylinder, pressing at 3.5-4 atmospheres or pressure.

**Forming bag handles and attaching them to the bag.** At this stage, the parameters of ultrasound exposure system and the steps of the welding process are defined as follows:
- Ultrasound oscillation generator (center working frequency ~ 19- 20 kHz, power at least 3000 W);
- Ultrasound concentrator/specialized form with a tool designed for this specific seam formation, working frequency 19 kHz-20 kHz, power at least 3000 W;
- Working tool: indicative dimensions of the working surface of the mold used to weld the bag handle 20x20 mm;
- In order to achieve high-speed operation, the system controller activates four ultrasound generators in parallel and ultrasound concentrators/specialized forms with tools that form four fastening seams of the bag handles.

### RPET Welding Process - Steps:

o The power of the ultrasound generator is set to the maximum power mode (3000 W);
o The ultrasound generator for applying handles is tuned to work with a central frequency in the range of 19-20 kHz. Accuracy of matching frequency values ± 0.01 kHz;
o Ultrasound generator for folding handles (folding in half) from a single-layer strip (typical width 50 mm) to a double strip (by fusing two layers together, then the sample width of the formed handle is 25 mm. The ultrasound generator is tuned to work with a center frequency in the range of 19-20 kHz. Accuracy of matching frequency values ± 0.01 kHz;
   - Ultrasound concentrator/specialized form impact area in seam segment 0.5 mm x 4 mm for fixing each handle;
   - The ultrasound concentrator/specialized form tool is aligned so that the plane of each handle fits the RPET material blank evenly;
   - Ultrasound exposure time for handle welding: 0.05-0.08 s;
   - Pressing is done mechanically by a moving crank, the movement is originated from an electric motor drive, for both sides of the bag.

**Forming the side and bottom seams of the bag.** At this stage, the parameters of ultrasound exposure system and the steps of the welding process are defined as follows:
- Ultrasound oscillation generator (central frequency ~15 kHz, power at least 4500 W);
- Ultrasound concentrator/specialized form with tool, upper part: ultrasound center frequency is close to 15 kHz, power is at least 4500 W;
- Ultrasound concentrator/specialized form with tool, lower part: ultrasound center frequency is close to 15 kHz, power is at least 4500 W;
- Base heaters for heating the base of the tool up to 300 °C.

### RPET Welding Process - Steps:

o Power of the ultrasound generator is set to the maximum power mode;
o Ultrasound generator, upper part, tuned to operate at a center frequency of 15 kHz, frequency matching accuracy ± 0.01 kHz;
o Ultrasound generator, lower part, tuned to operate at a center frequency of 15 kHz, frequency matching accuracy ± 0.01 kHz;
o The working tools of ultrasound concentrators/specialized forms are adjusted so that the working surfaces of both tools form a plane considering the different amount of layers of the RPET material to be connected.
∘ The temperature of the base used for preheating the RPET material blank is from 200 °C to 300 °C;
∘ Duration of exposure to ultrasound: from 0.13 to 0.15 s.

**Table 2. Characteristics of non-woven PET/RPET material and the product (bag) made from it.**

| **Parameters** | **Values** | |
|---|---|---|
| Physical properties of raw materials | 1. Areal density: | |
| | | • PET: 80-100 g/m² |
| | | • RPET: 80-100 g/m² |
| | 2. Melting point **[7]**: | |
| | | • PET: 260 °C |
| | | • RPET: 270 °C |
| | 3. Elasticity **[8]**: | |
| | | • PET: 50-150 percent |
| | | • RPET: 50-150 percent |
| | 4. Limiting deformation temperatures **[9]:** | |
| | | • Low temperature capabilities: -20 °C |
| | | • Heat deformation temperature: 70 °C |
| Solution parameters | 1. | Speed: 40-45 bags per minute |
| | 2. | Joint strength (maximum load-bearing capacity): 45 kg |

**Table 3: PET/RPET handle forming and attachment parameters in semiautomatic and automatic non-woven PET/RPET bag production process.**

| **Parameters** | **Values** |
|---|---|
| Technical parameters | Critical process parameters: |
| | - Pressing duration: 0.13-0.14 seconds |
| | - Base temperature: 200-300 °C |
| | - Pressing force: pressure 0.3-0.5 MPa (0.3-0.5 N/mm²) |
| | - Generator power: 2,500-4,000 kW |
| Process method | Automated |
| Process speed | 40 pcs./min. (after assessing the defects and the risks of redesigning the products/scenarios) |
| New system features (compared to the known ones) | - The possibility of changing the temperature of the heated base (additional increase to 300 °C); |
| | - Stable ultrasound intensity; |
| | - Adjustable power generator; |
| | - Optimal clamping force (pressure) of the ultrasound concentrator/specialized form to the surfaces to be connected. |

**Table 4: Non-woven shopping bag, the seams of which are made by automatic thermal bonding**

| **Parameters** | **Values** |
|---|---|
| Bearing weight | 45 kg |
| Areal density: | 80-100 g/m² |

**The production process of a bag from non-woven RPET material in an automated system (prototype of the system implementing the ultrasound welding method of non-woven PET/RPET material).** The detailed stages of shopping bag production are presented, the production is performed with systematic means and tools, the whole of which implements the automated process of bag production and ultrasound welding.

### A. Unwinding the material from the roll, folding the edges and welding:

- The roll of non-woven material is lifted from the floor of the production workshop by pneumatically controlled manipulators;
- The material is unwound from a pneumatically controlled clamping axis;
- The tension of the unwinding material is regulated through the sensors measuring the tension of the material, the control unit and the controlled magnetic powder brake. At the end of the roll, the automatic stop of the production prototype is triggered;
- The edge of the material is supported in one place with the edge position control system, which consists of a sensors, a control unit and an electric drive;
- Two pneumatically controlled knives are used to form the bottom of the bag. The edges of the material are folded and welded by using ultrasound concentrators/specialized forms and bases/rotating wheels;
- An additional controllable magnetic powder brake and drive with asynchronous motor and frequency converter are used to evenly tension the material;
- The system of pneumatically adjustable shafts ensures even tension of the material fabric and supply of the required amount of material when the machine starts and stops. The drive is equipped with rubber shafts and pneumatic compression;
- The auxiliary stepper drive ensures a constant tension of the material along the entire length of the production line, it is equipped with rubber shafts and pneumatic clamping (on both sides of the material workpiece).

Recommended parameters of ultrasound exposure equipment:
- Digital ultrasound oscillation generators, power 3000 W, center frequency 20 kHz, 2 pcs.;
- Ultrasound concentrators/specialized forms, power 3000 W, center frequency 20 kHz, 2 pcs.;
- Bases: rotating steel wheels with teeth, 2 pcs.

### B. Forming the handles of the product (non-woven bag):

- Bag handle cutting mechanisms on both sides of the material blank, pneumatically controlled;
- The handles of the bag are fixed from the edges of the blank material, two symmetrically standing devices are intended for this purpose;
- The handle material is unwound from the material roll, there is a material break sensor, a DC drive;
- The handle strip is formed and welded with ultrasound concentrators/specialized forms and clamping bases/rotating wheels;
- The values of the length, position and distance from the central position of the handles are determined in the controller computer, further the pushes in space are determined by stepper gears;
- The handles are formed and cut with knives with the help of pneumatic cylinders and stepper motors. Handles are welded to the material blank under the influence of ultrasound, using space-repositionable ultrasound concentrators/specialized forms with special configuration working tools. To speed up the process, it is recommended to use 4 units working at the same time, since the bag has 2 handles, each one is welded to the edge of the blank at both ends - a total of 4 handle connection areas.

Recommended parameters of the ultrasound exposure equipment:
- Digital ultrasound oscillation generators, power 3000 W, center frequency 20 kHz, 6 pcs.;
- Ultrasound concentrators/specialized forms, power 3000 W, oscillation center frequency 20 kHz, 6 pcs.;
- Working tools (special molds for forming an 'x'-shaped seam), 4 pcs.;
- Bases - rotating steel wheels with teeth, 2 pcs.

### C. Prototype Part of Product Material Preparation:

- The non-woven material blank with handles welded to the edge is fed to the shaft system for rotating the material blank at an angle of 90 degrees, using a stepper drive with rubber shafts and pneumatic compression;
- After changing the direction at an angle of 90 degrees, the material is positioned with an optical sensor and a stepper gear, and centered with two optical sensors and the stepper gear. To facilitate the shaping of the sides and bottom of the manufactured product (bag), two wheels/knives with a stepper gear are used, which would pass at the specified place across the material blank;
- The material blank of the required length is fed to the cross-cutting double knife by a stepper drive with rubber shafts with a stepper drive.

### D. Prototype Part of Product Formation:

- The material fed from the cross-cutting knives is caught by two pneumatic grippers and transported to the distance set by the guides with the help of a stepper motor;
- Guided from above, the specialized mold for bag formation must descend to the given position during the stepper motor feed. This mold is assembled from separate parts, according to the dimensions of the bag, and has a programmable temperature heating with temperature control. This heating is required to preheat the material blank. According to the control algorithm, the material is pressed from all sides to the specialized mold for bag formation and ultrasound welding of the seams is performed by using ultrasound concentrators/specialized forms with working tools;
- Two ultrasound concentrators/specialized forms with spatially distributed ultrasound impact working tools are used for vertical linear seam welding and two ultrasound concentrators/specialized forms with spatially distributed ultrasound impact working tools for welding fold seams ('Y' shape) are used;
- These ultrasound concentrators/specialized forms with space-distributed ultrasound impact working tools for vertical linear seam welding and folding seam ('Y' shaped) welding are placed on both sides of the bag forming specialized mold (two on the left and two on the right). They are mounted on carriages pushed by stepper motors on guides, and have clamping force adjustment with pneumatic cylinders. Pressing of the material blank to the bag forming specialized mold is performed by stepper motors and pneumatic cylinders. When the material blank is released, four stepper motors with friction belts pull the formed bag from the specialized bag forming mold, and the mold rises up.

Recommended parameters of the ultrasound exposure equipment:
- Digital ultrasound oscillation generators, 4000 W, frequency 15 kHz, 4 pcs.;
- Ultrasound concentrators/specialized forms, power 4000 W, center frequency of oscillations 15 kHz (diameter of piezoceramic rings 70 mm), 4 pcs.;
- Working tools: special forms made of titanium alloy for forming linear seam and 'Y'-shaped fold seams), total 4 pcs.;

### E. Collection of Products:

- After ultrasound welding of all seams, i.e., after making the bag, it falls on the belt conveyor, the speed of which is selectable;
- In the next stage, by airflow and spring guides, the bag is brought to the folding mechanism. Through the prepared folding and welding points, the bag is folded, compressed and enters the collection mechanism. The bags are collected in the accumulator, counted, and separated according to the set number. The operator removes the bags from the accumulator.

### F. Control of the Production System Prototype:

- The control of the production system prototype is carried out with programmable controllers and the main control sensor panel. It has the ability to set and control all parameters of the bag production prototype. Control panels, buttons, knobs are installed in the service areas of the bag production prototype. All the drives are installed inside the prototype bag production machine. All ultrasound oscillation generators of the system prototype are installed in the system, as close as possible to the installation locations of the ultrasound concentrators/specialized forms.

**Testing of Joints Formed by the Effect of Ultrasound.** The stretching tests of the joining seams of non-woven PET/RPET material were performed with the stretching machine "Tinius Olsen" H10KT, stretching speed 50 mm/min, initial load 0.5 N. The maximum value of the load variation interval is up to 7500 N. Stretching stroke 500 mm, sample gripper length 170 mm. The non-woven sheet joining samples prepared for tensile tests and their dimensions are shown in Figure 5: a) two layers (RPET 1-1, RPET 1-2), b) four layers (RPET 2-1, RPET 2-2), and c) formed the seam connecting the handle and the edge.

The dependence of the tensile force and the elongation of the samples during the tests for the RPET non-woven material samples (RPET 1-1 and RPET 1-2), when the seam of overlapping sheets is formed, is presented in Figure 7 (a) and Table 5.

**Table 5. The values obtained for RPET samples (RPET 1-1 - RPET 1-2) during the tensile test when the seam of overlapping sheets is formed**

| **Sample No.** | **Maximum force, N** | **Elongation at maximum force, %** | **Total elongation, %** | **Stress in the fracture zone, MPa** |
|---|---|---|---|---|
| **RPET 1-1** | 342.0 | 12.82 | 25 | - |
| **RPET 1-2** | 340.8 | 12.21 | 12.53 | 0.337 |
| **Average** | 341.4 | 12.51 | 18.76 | - |
| **Std.** | 0.849 | 0,437 | 8.82 | 0.238 |

The dependence of the tensile force and the elongation of the samples during the tests of RPET non-woven material samples (RPET 2-1 and RPET 2-2), when the seam of overlapping double sheets is formed and a total of 4 non-woven material sheets are connected to each other, is presented in Figure 7 (b) and Table 6.

**Table 6. The values obtained for RPET samples (RPET 2-1 - RPET 2-2) during the tensile test, when the seam of two overlapping double sheets is formed.**

| **Sample No.** | **Maximum force, N** | **Elongation at maximum force, %** | **Total elongation, %** | **Stress in the fracture zone, MPa** |
|---|---|---|---|---|
| **RPET 2-1** | 442 | 14.14 | 20.24 | 0.014 |
| **RPET 2-2** | 347.2 | 9.45 | 11.24 | 0.290 |
| **Average** | 394.6 | 11.79 | 15.74 | 0.151 |
| **Std.** | 67.0 | 3.319 | 6.36 | 0.196 |

Dependence of tensile strength and elongation of RPET samples (RPET 3-3 and RPET 3-4) when a seam connecting the PET handle of the bag and the folded edge of the RPET is formed and a total of 4 sheets of non-woven material are interconnected, is presented in Figure 7 (c) and Table 7.

**Table 7. The values obtained for RPET samples (RPET 3-1 - RPET 3-4) during the tensile test, when a seam connecting the PET handle of the product (bag) and the RPET edge is formed (a total of 4 sheets are joined together).**

| **Sample No.** | **Maximum force, N** | **Elongation at maximum force, %** | **Total elongation, %** | **Stress in the fracture zone, MPa** |
|---|---|---|---|---|
| **RPET 3-1** | 134.4 | 18.35 | 23.76 | 0.007 |
| **RPET 3-2** | 123.6 | 20.24 | 27.00 | 0.103 |
| **RPET 3-3** | 147.0 | 18.87 | 20.35 | 0.141 |
| **RPET 3-4** | 125.0 | 17.41 | 22.16 | 0.072 |
| **Average** | 132.5 | 18.72 | 23.32 | 0.081 |
| **Std.** | 10.78 | 1,178 | 2,821 | 0.057 |

The dependence of the tensile force and the elongation of the specimens during the tests of RPET samples (RPET 3-1 and RPET 3-2), when the seam connecting the PET handle of the bag and the RPET edge is formed and a total of 4 sheets are joined together, is presented in Figure 7 **(d).**

For RPET samples, the values obtained during the tensile test when forming the seams of overlapping sheets (RPET 1-1 - RPET 1-2) and (RPET 2-1 - RPET 2-2), as well as the seam connecting the PET handle of the bag and the edge of RPET (RPET 3 -1 - RPET 3-4) and a total of 4 sheets are interconnected, are presented in Table 8.

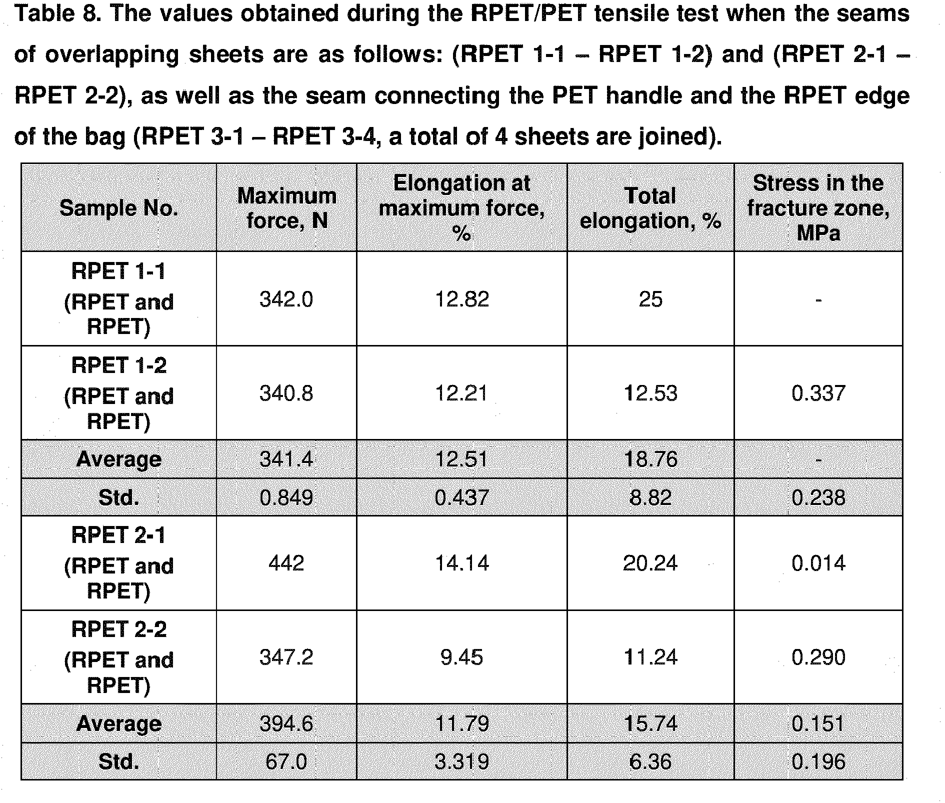

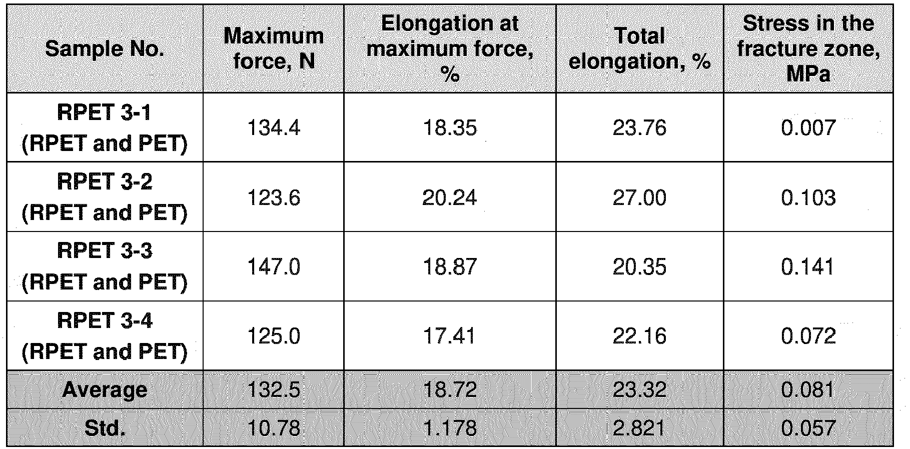

Based on the tests results it was assumed that both areas of the bag's one handle attachment could withstand the total tensile forces of up to (25.2-30) kg. Since the bag has two handles, then both handles could withstand the total tensile forces with the weight placed in the bag up to (50.4-60) kg.

Also, in order to compare the maximum tensile forces that the welding seams of two overlapping sheets of RPET non-woven material blanks and two overlapping sheets of non-woven PET material withstand, tensile tests were also performed for PET material blanks. The dependence of tensile force and elongation of the sample during the tests of PET samples (PET1 and PET2), when the sheets overlap during seam formation, is presented in Table 9 and **Figure 7** (e).

After comparing the results of maximum tensile forces obtained for welds of RPET blanks (RPET 1-1 and RPET 1-2, Table 8) and PET blanks (PET 1 and PET 2, Table 9), it was found that
- The seams of RPET blanks (with 3 rows of stitches) can withstand a tensile force of up to 340 N,
- The seams of PET blanks (with 2 rows of stitches) can withstand a tensile force of up to 167 N.

Therefore, the use of 3-row stitches is promising for application in production conditions.

**Table 9. The values obtained for PET samples (PET1 and PET2) during the tensile test when the seam of overlapping sheets is formed.**

| **Sample No.** | **Maximum force, N** | **Elongation at maximum force, %** | **Total elongation, %** | **Stress in the fracture zone, MPa** |
|---|---|---|---|---|
| **PET 1:** | 167.4 | 4.54 | 6.65 | 0.058 |
| **PET 2:** | 176.6 | 7.32 | 7.47 | 2.145 |
| **Average** | 172.0 | 5.93 | 7.06 | 1.101 |
| **Std.** | 6.51 | 1.97 | 0.58 | 1.476 |

### LIST OF NON-PATENT LITERATURE

**1.** Kellie G., Advances in Technical Nonwovens, Woodhead Publishing Series in Textiles: Number 181, 2016, p.508
**2.** Jones I. and Stylios G. K., Joining textiles, Principles and applications, Woodhead Publishing Series in Textiles: Number 110, 2013, p.594
**3.** Troughton M.J., Handbook of Plastics Joining, A Practical Guide, 2nd Edition, 2008, p.590
**4.** D'huys et al. Multicriteria evaluation and optimization of the ultrasonic sealing performance based on design of experiments and response surface methodology, Packag Technol Sci. 2019;32:165-174.
**5.** Warren K. C., Resistance welding of glass fiber reinforced PET: Effect of weld pressure and heating element geometry, Journal of Reinforced Plastics and Composites, 2016, Vol. 35(12), 974-985
**6.** Juan A. Gallego-Juarez and Karl F. Graff, Power Ultrasonics, Applications of High-intensity Ultrasound, Benatar A, Ultrasonic welding of plastics and polymeric composites, Woodhead Publishing Series in Electronics and Optical Materials: Number 66, 2015, 295-312.
**7.** N.Ruqiyah et al., Thermal properties of polyethylene reinforced with recycled-poly (ethylene terephthalate) flakes, IOP Conference Series: Materials Science and Engineering, Volume 342, International Conference on Innovative Technology, Engineering and Sciences 2018 (iCITES 2018) 1-2 March 2018, Universiti Malaysia Pahang (UMP) Pekan Campus Library, Malaysia, DOI 10.1088/1757-899X/342/1/012094, http://iopscience.iop.org/article/10.1088/1757-899X/342/1/012094/pdf
**8**. H. A.M. Saeed, et al, Properties of recycled poly (ethylene terephthalate) (PET)/hyperbranched polyester (HBPET) composite fibers, The Journal of The Textile Institute, Volume 106, 2015 - Issue 6, published online: 25 Jun 2014, https://doi.org/10.1080/00405000.2014.930577.
**9.** RPET http://fliahtplastics.co.uk/rpet.html.

## Claims

1. A method for welding layers of non-woven PET/RPET material by ultrasonic effect, where the temperature of the compressed layers of material is raised by the ultrasound effect until the layers fuse together, comprising
- Compression of layers of non-woven PET/RPET material,
- Compression of compacted layers,
- Ultrasound impact with the ultrasound concentrator/specialized form on the intended connection point of the compacted layers of material,
- Cooling of formed seams while maintaining their compression.

2. A method for ultrasound welding of layers of non-woven recycled waste thermoplastic material, where the temperature of the compressed layers of the material is raised by exposure to ultrasound until the layers fuse together, comprising
- Compression of 2 or more layers of non-woven PET/RPET material (8.1, 8.2),
- Compression of compacted layers (8.1, 8.2) with a pressure of 0.3-0.5 Mpa,
- impact with ultrasound of 10-30 kHz frequency and 1500-4500 W power via ultrasound concentrator-specialized mold (3) to the intended connection point of compacted material layers (8.1, 8.2), where ultrasound impact lasts from 0.1 to 0.4 seconds,
- Cooling of the formed seam (7) without the effect of ultrasound, maintaining the pressure for up to 0.5 seconds.

3. The method according to claim 1 or 2, wherein the blanks of PET/RPET material (8.1, 8.2) are heated to a temperature in the range of 200 °C to 300 °C before exposure to ultrasound.

4. The method according to claim 1 or 2, wherein the ultrasound effect is spatially concentrated with 18-22 kHz frequency or is spatially distributed with 13-17 kHz frequency.

5. The method according to claim 1 or 2, wherein the ultrasound concentrator/specialized form (3) is forming more than one stitch in parallel or an entire seam (7) simultaneously.

6. The method according to any one of claims 1-5, wherein the seam (7) of the material layers (8.1, 8.2) is formed between
- The ultrasound concentrator/specialized form (3) on one side of the working surface of the compressed material blanks (8.1, 8.2), and
- The blank (8.1, 8.2) processing base or the surface of working tool on the opposite side of the material blanks (8.1, 8.2).

7. A system for joining non-woven recycled waste thermoplastic material blanks by ultrasound effect, comprising
- Line conveyor with a base to process material blanks (8.1, 8.2);
- One or more 13-22 kHz frequency 1500-4000 W ultrasound generators (1) and, accordingly, one or more ultrasound concentrators/specialized forms (3),
- Work tool to form a seam (7) from the opposite side of the blank (8.1, 8.2),
- Device to compress compacted material (8.1, 8.2) blanks with a pressure of 0.3-0.5 Mpa,
Where the system is configured
- To make in contact 2 to 4 layers of non-woven PET/RPET material blanks (8.1, 8.2),
- To compress the contacted layers (8.1, 8.2) with a pressure of 0.3-0.5 Mpa,
- To apply the ultrasound effect of 15-22 kHz center frequency and of 1500-4000 W power for 0.1-0.4 second via ultrasound concentrator/specialized form (3) to the intended place of connection of layers (8.1, 8.2) (7),
- To cool the formed seam (7) by maintaining pressure without ultrasound exposure for up to 0.5 seconds.

8. The system according to claim 7, comprising means for heating the blanks (10, 12, 13), configured to heat the material of the blanks (8.1, 8.2) to a temperature of 200-300 °C before the ultrasound exposure.

9. The system according to claim 8, where the means for heating the PET/RPET material blank (8.1, 8.2) is one of the following means or a combination thereof
- The blank processing base (10) heating the blank up to 300 °C,
- The means of blowing with hot air flow of up to 200 °C (12),
- The means of infrared preheating at 200 °C (13).

10. The system according to claim 7, wherein the working tool is
- A basis of the conveyor line, to which the compressed blanks are pressed with an ultrasound concentrator/specialized form; or
- A rotating wheel (6) of hardened steel with teeth that form stitches of the seam (7), where the dimensions of the teeth correspond to the size of the stitch of the seam (7); or
- A specialized seam-shaped tool with a working surface that includes teeth corresponding to the size of the stitches of the seam (7); or
- A second ultrasound impact concentrator/specialized form (3), with a working surface corresponding to the shape of a specific seam.

11. The system according to claim 7, wherein more than one ultrasound concentrator/specialized form (3) is configured to weld more than one seam (7) at the same time.

12. The system according to claim 7, where more than one ultrasound concentrator/specialized form (3) is configured to weld individual seams (7) of material layers (8.1, 8.2) one after the other in a conveyor manner, wherein any individual ultrasound concentrator/specialized form (3) welds the same seam (7) of more than one specimen of the same product.

13. A product of non-woven material produced by the method according to any one of claims 1 to 6.

14. A product according to claim 13, wherein the material is a non-woven PET/RPET material.

15. A bag made of non-woven PET/RPET material blanks - two sides with a bottom of one blank, another two separate side blanks, two folded edge blanks, and two handle blanks - made by the method according to any one of claims 1 to 6, wherein
• The folded edge (9) of the top of the bag is formed by applying a spatially concentrated ultrasound effect of 19-20 kHz frequency and 3000 W of power, where the working tool is a rotating wheel (6) of hardened steel with teeth forming segments of the seam (7), pressed from the folded edge (9) on the opposite side with a pneumatic cylinder at a pressure of 3.5-4 atmospheres or 0.35-0.4 MPa;
• To the formed edges, the handles (8.1) are attached with four seams, where the suitable mold of a seam is a 20x20 mm square with diagonals, applying a spatially concentrated ultrasound effect of 19-20 kHz center frequency and of 3000 W power, wherein the working tool is the base of the conveyor line (10), to which blanks (8.1, 8.2) are pressed by the pressure of 3.5-4 atmospheres or 0.35-0.4 Mpa and are welded together with ultrasound concentrators/specialized forms (3), the duration of ultrasound exposure is 0.05s-0.08 s, and 4 seams of handle (7) are welded by 4 ultrasound concentrators/specialized forms (3) at the same time;
• The side and bottom seams are formed by applying spatially distributed ultrasound effect of 15 kHz frequency and of 4500 W power, where the upper and the lower ultrasound concentrators/specialized forms are used to weld the seams, the working surfaces of which are aligned to the plane with the layers of the blanks to be joined, where the blanks are heated to 300 °C, and exposed to ultrasound for 0.1-0.15 seconds, with compression of 3.5-4 atmospheres or 0.35-0.4 MPa pressure, and with cooling of the seam with pressure retention without ultrasound exposure for 0.5 seconds.
